Europäisches Patentamt

European Patent Office

Office européen des brevets

(11) Veröffentlichungsnummer: **0 006 573**
A2

# (12) EUROPÄISCHE PATENTANMELDUNG

(21) Anmeldenummer: **79102037.3**

(22) Anmeldetag: **20.06.79**

(51) Int. Cl.³: **G 03 B 15/03**

(30) Priorität: **01.07.78 DE 7819870 U**

(43) Veröffentlichungstag der Anmeldung: **09.01.80**
Patentblatt 80/1

(84) Benannte Vertragsstaaten: **BE CH DE FR GB IT NL SE**

(71) Anmelder: **BAYER Aktiengesellschaft, Zentralbereich Patente, Marken und Lizenzen Bayerwerk, D-5090 Leverkusen 1 (DE)**

(72) Erfinder: **Lehnert, Günther, Dr., Saarstrasse 48, D-5090 Leverkusen 1 (DE)**
Erfinder: **Schiffer, Rainer, Dr., Am Zaarhäuschen 7, D-5060 Bergisch-Gladbach 3 (DE)**

(54) **Aufnahmeapparatur für die Plattenthermographie.**

(57) Die Aufnahmeapparatur für die Plattenthermographie besteht aus einem Träger (1) mit einer Halterung für eine thermographische Platte und einer photographischen Kamera mit Blitzlicht (6) auf der der Platte gegenüberliegenden Seite. Zum Einbau verschiedener Kamerasysteme ist ein Adapter (3) vorgesehen, der auf den Träger (1) aufgesteckt und mit ihm verriegelt werden kann. An dem Träger (1) und im Adapter (3) sind Stromschienen (10a, 10b) bzw. Kontaktleisten angeordnet, so daß beim Aufstecken des Adapters (3) eine elektrische Verbindung zwischen dem Blitzlicht (6) und einer an dem Träger (1) befindlichen Stromquelle (9) hergestellt wird.

BAYER AKTIENGESELLSCHAFT     5090 Leverkusen, Bayerwerk
Zentralbereich     K1/RBg/eb
Patente, Marken und Lizenzen     30. Juni 1978

## Aufnahmeapparatur für die Plattenthermographie

Die Neuerung betrifft eine Aufnahmeapparatur für die Plattenthermographie, bestehend aus einem Träger mit einer Halterung für eine thermographische Platte auf der einen Seite, einer photographischen Kamera mit Blitzlicht auf der gegenüberliegenden Seite und einem am Träger befindlichen Haltegriff. Mit Hilfe dieser Apparatur können thermische Anomalien im menschlichen Körper dargestellt und dokumentiert werden. Geeignete thermographische Platten sind z. B. in der deutschen Patentschrift 25 36 773 beschrieben. Die Plattenthermographie hat sich bei der Diagnose bestimmter Krankheiten, insbesondere bei der Früherkennung von Tumoren, Venenentzündungen, Verstopfung von Blutgefäßen und dergleichen, bewährt.

In der Praxis besteht häufig das Bedürfnis, das Kamerasystem zur Dokumentation der thermographischen Aufnahmen auszutauschen. In manchen Fällen wird z. B. eine schnelle Dokumentation gewünscht, während es in anderen Fällen auf eine

Le A 18 992 (GM)

besonders farb- und detailgetreue Aufzeichnung ankommt und zudem großer Wert auf die Langzeitstabilität der Aufnahmen gelegt wird. Im ersten Fall wäre die Verwendung einer Sofortbildkamera zweckmäßig. Im zweiten Fall kommt dagegen nur eine hochwertige Kamera mit einem Umkehrfilm (Diafilm) infrage.

Der Neuerung liegt daher die Aufgabe zugrunde, eine Aufnahmeapparatur für die Plattenthermographie zu schaffen, die hinsichtlich der Verwendung verschiedener Kamerasysteme flexibel ist und eine schnelle und leichte Umrüstung von einem Kamerasystem auf ein anderes ermöglicht.

Diese Aufgabe wird neuerungsgemäß dadurch gelöst, daß zum Einbau verschiedener Kamerasysteme jeweils ein Adapter vorgesehen ist, der auf den Träger aufsteckbar und mit ihm verriegelbar ist, und daß an dem Träger und im Adapter Stromschienen bzw. Kontaktleisten angeordnet sind, so daß beim Aufstecken des Adapters die elektrische Verbindung zwischen dem Blitzlicht und einer an dem Träger befindlichen Batterie hergestellt wird.

Eine bevorzugte Ausführungsform besteht darin, daß der Träger aus einem Hohlprofil besteht und die Stromschienen innerhalb des Hohlprofiles angeordnet sind.

Vorteilhaft ist die Batterie im Haltegriff am Träger untergebracht. Der Haltegriff ist vorzugsweise im Schwerpunkt der gesamten Apparatur angeordnet.

Die mit der Neuerung erzielten Vorteile bestehen darin, daß die Apparatur mit wenigen Handgriffen auf ein anderes Kamerasystem umgerüstet werden kann. Dabei wird automatisch auch die Stromversorgung zum Blitzlicht hergestellt.

Le A 18 992 (GM)

Im folgenden wird ein Ausführungsbeispiel der Neuerung anhand von Zeichnungen näher erläutert. Es zeigen

Fig. 1    eine Gesamtansicht der Aufnahmeapparatur,

Fig. 2    den Adapter mit der Kamera und eine Teilansicht des Trägers mit der Stromversorgung und

Fig. 3    die Verriegelung des Adapters.

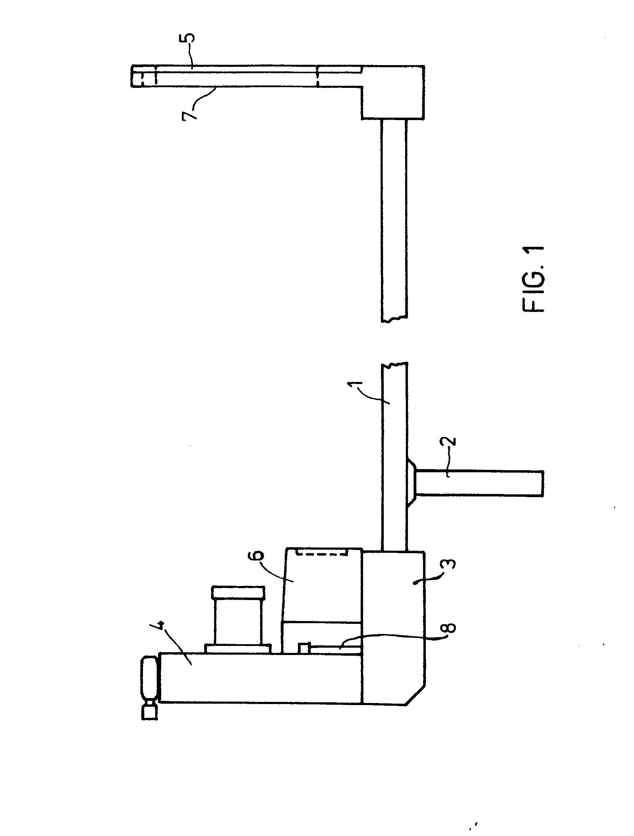

Die Aufnahmeapparatur gemäß Fig. 1 besteht im wesentlichen aus dem Träger 1 mit dem Handgriff 2, dem auswechselbaren Adapter 3 für die Kamera 4 und der Halterung 5 für die thermographische Platte. Mit der Kamera 4 verbunden ist ein handelsübliches Blitzlichtgerät 6. Die Kamera 4 ist so angeordnet, daß ihre optische Achse senkrecht auf der Ebene 7 der thermographischen Platte steht. Durch Betätigung des Hebels 8 wird die Adapterbefestigung am Träger 1 entriegelt und die Kamera 4 kann zusammen mit dem Blitzlicht 6 und dem Adapter 3 vom Träger 1 gelöst werden. Der Handgriff 2 ist im Schwerpunkt der gesamten Apparatur angeordnet. Auf diese Weise kann der Benutzer die Apparatur mit einer Hand halten, ohne daß dabei ein störendes Kippmoment auftritt.

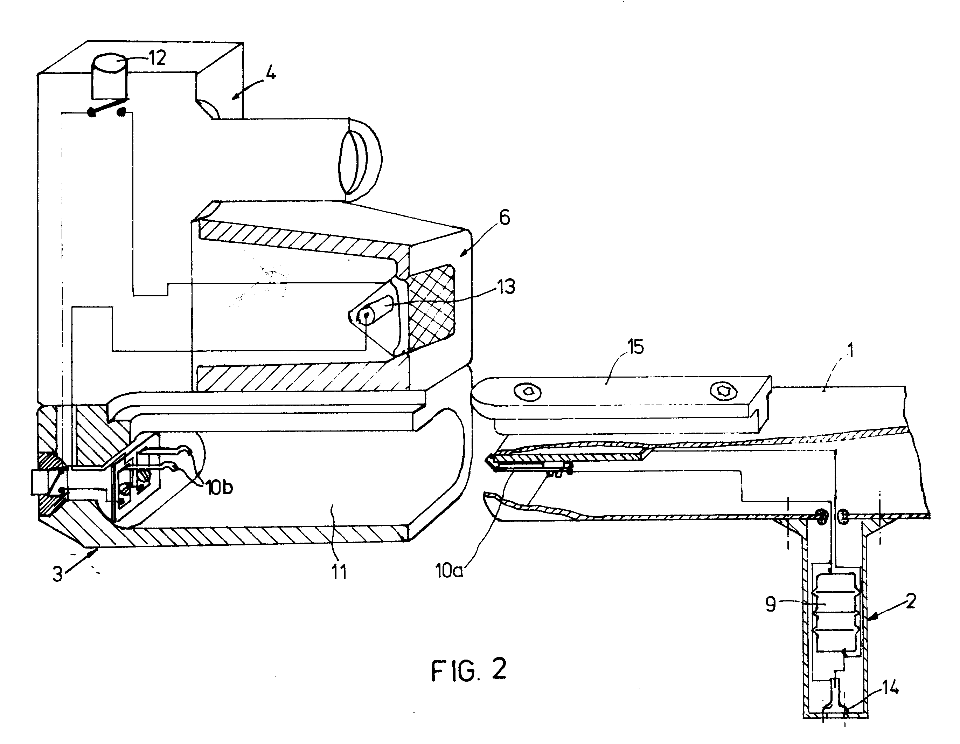

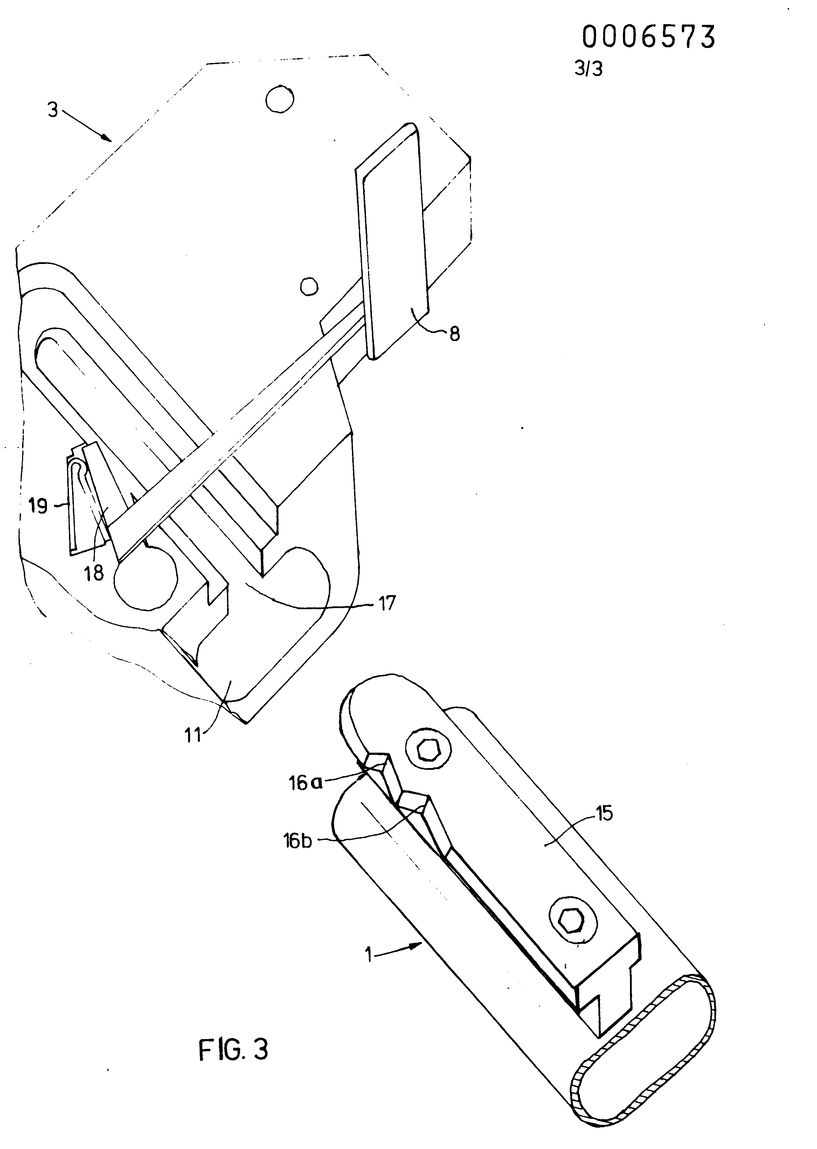

Der Träger 1 besteht aus einem rechteckförmigen Hohlprofil mit abgerundeten Kanten (siehe Fig. 2 und 3). Im Griff 2 ist ein Akku 9 als Energiequelle für das Blitzlicht 5 untergebracht. Seine Pole sind mit den beiden Stromschienen 10a im Träger 1 verbunden. Der Adapter 3 weist eine dem Hohlprofil angepaßte Aussparung 11 auf, an deren Ende adapterseitige Stromschienen 10b angeordnet sind. Schiebt man den Adapter 3 mit der Aussparung 11 auf den Träger 1 auf, so wird jeweils der elektrische Kontakt zwischen den Stromschienen 10b und 10a hergestellt. Damit ist das Blitzlicht 6 an den Akku 9 angeschlossen, so daß die Blitzröhre 13

Le A 18 992 (GM)

über den Auslöser 12 gezündet werden kann.

Die Anschlüsse für die Batterie 9 sind am unteren Ende des Haltegriffes 2 in Form von Steckbuchsen 14 herausgeführt. Sie dienen zum Anschluß eines Ladegerätes zum Nachladen des Akkus 9. Das Nachladen erfolgt in einfacher Weise dadurch, daß die Apparatur mit dem Griff 2 auf ein Stativ gesetzt wird, das mit dem Ladegerät verbunden ist. Gleichzeitig mit dem Aufsetzen der Apparatur wird durch einen Schalter der Stromkreis zum Blitzlichtgerät 6 abgetrennt.

Aus Figur 3 ist die mechanische Verriegelung des Adapters 3 mit dem Träger 1 ersichtlich. Sie besteht aus einem am Ende des Trägers 1 befestigten T-Profil 15 mit Einrastungen 16a und 16b und einer entsprechenden adapterseitigen Aussparung 17 mit einer Sperrklinke 18 und Feder 19. Beim Aufschieben des Adapters 3 auf den Träger 1 rastet die Sperrklinke 18 in die Vertiefungen 16a, 16b des T-Profiles 15 ein. Bei der ersten Vertiefung 16a wird eine vorläufige Verriegelung erreicht. Bei der zweiten Vertiefung 16b ist der Adapter 3 endgültig verriegelt. Durch Betätigung des Hebels 8 gegen den Druck der Feder 19 kann die Verriegelung wieder gelöst werden.

Le A 18 992 (GM)

Schutzansprüche:

1. Aufnahmeapparatur für die Plattenthermographie, bestehend aus einem Träger mit einer Halterung für eine thermographische Platte auf der einen Seite, einer photographischen Kamera mit Blitzlicht auf der gegenüberliegenden Seite und einem am Träger befindlichen Haltegriff, dadurch gekennzeichnet, daß zum Einbau verschiedener Kamerasysteme jeweils ein Adapter (3) vorgesehen ist, der auf den Träger (1) aufsteckbar und mit ihm verriegelbar ist und daß an dem Träger (1) und im Adapter (3) Stromschienen (10a, 10b) bzw. Kontaktleisten angeordnet sind, so daß beim Aufstecken des Adapters (3) die elektrische Verbindung zwischen dem Blitzlicht (6) und einer in oder an dem Träger (1) befindlichen Batterie (9) hergestellt wird.

2. Aufnahmeapparatur nach Anspruch 1, dadurch gekennzeichnet, daß der Träger (1) aus einem Hohlprofil besteht und die Stromschienen (10a) innerhalb des Hohlprofiles angeordnet sind.

3. Aufnahmeapparatur nach Anspruch 1 bis 2, dadurch gekennzeichnet, daß die Batterie bzw. der Akku (9) im Haltegriff (2) am Träger (1) untergebracht ist.

4. Aufnahmeapparatur nach Anspruch 1 bis 3, dadurch gekennzeichnet, daß der Haltegriff (2) im Schwerpunkt der Apparatur angeordnet ist.

5. Aufnahmeapparatur nach Anspruch 1 bis 4, dadurch gekennzeichnet, daß im Haltegriff (2) eine Steckverbindung und ein elektrischer Schalter vorgesehen ist, wodurch einerseits eine elektrische Verbindung zu einem Ladegerät hergestellt wird und andererseits beim Anschluß des Ladegeräts der Stromkreis zum Blitzlicht (6) abgetrennt wird.

Le A 18 992 (GM)

FIG. 1

FIG. 2

FIG. 3